# EUROPEAN PATENT SPECIFICATION

(11) **EP 2 157 552 B1**
(45) Date of publication and mention of the grant of the patent: **11.07.2012**
(21) Application number: 08162655.8
(22) Date of filing: 20.08.2008
(51) Int. Cl.: G07C 9/00

(54) **Electromechanical lock**
Elektromechanische Sperre
Verrouillage électromécanique

(43) Date of publication of application: 24.02.2010
(73) Proprietor: iLoq Oy, 90590 Oulu (FI)
(72) Inventor: Pukari, Mika, 90570 Oulu (FI)
(74) Representative: Brockman, Pertti Erik

(56) References cited:
- EP-A- 1 288 841
- WO-A-01/23694
- DE-A1- 4 329 697
- GB-A- 2 397 613
- US-A- 4 631 940
- US-A1- 2007 290 798

## Description

### Field

The invention relates to electromechanical locks.

### Background

Various types of electromechanical locks are replacing traditional mechanical locks. Electromechanical locks require an external supply of electric power, a battery inside the lock, a battery inside the key, or means for generating electric power within the lock making the lock user-powered. Electromechanical locks provide many benefits over traditional locks. They provide better security, and the control of keys or security tokens is easier.

In addition, most electromechanical locks and/or keys and tokens are programmable. It is possible to program the lock to accept different keys and decline others.

One problem associated with all kind of lock systems is the key or security token distribution. Keys and security tokens must be distributed to users. On the other hand, users may have several keys and security tokens at their disposal which may lead to burdensome handling of the keys and tokens.

EP1288841 A discloses an access control system for a vehicle. For unlocking the vehicle, the vehicle and a portable transponder device communicate by a passive response communication method. The access control system includes sensors coupled to the door handles of the vehicle and connected to a base station control unit so that, when the user pulls a door handle to open a door of the vehicle, a signal is sent from the corresponding sensor to the base station control unit which responds to this signal by interrogating the portable transponder device by sending a wake-up signal followed by an interrogation signal, including an encrypted random number and a base station identification code. The portable transponder device receives the interrogation signal over the LF link and checks that the interrogation corresponds to a valid interrogation by its corresponding base station. If the interrogation is valid, the portable transponder device responds by transmitting identification data that it has stored in a memory over the UHF link to the base station control unit, the identification data being encrypted by using the random number transmitted by the base station control unit. The base station control unit decrypts and checks the identification data transmitted by the portable transponder device and if the identification is valid, enables the unlocking of the locks.

### Brief description

According to an aspect of the present invention, there is provided an electromechanical lock as specified in claim 1.

According to another aspect of the present invention, there is provided a method for operating an electromechanical lock as specified in claim 14.

The invention has several advantages. The described electronic lock and key system and wireless solutions minimize energy consumption in a wireless lock, enabling self-powered lock solutions and a long operating time for battery-powered lock solutions.

In an embodiment of the invention, an electronic wireless key is utilized for wirelessly opening an electronic wireless lock. The key is carried by a person as a part of his wireless communication device and it may be provided with a Near Field Communications (NFC) device.

Embodiments of the invention may be applied to electromechanical locks having an external power supply, a battery inside the lock or inside the key or user-powered electromechanical locks.

### List of drawings

Embodiments of the present invention are described below, by way of example only, with reference to the accompanying drawings, in which
Figure 1A illustrates an embodiment of an electronic authentication system;
Figure 1B illustrates an embodiment of a self-powered electronic locking system;
Figure 2 illustrates an embodiment of a communication unit;

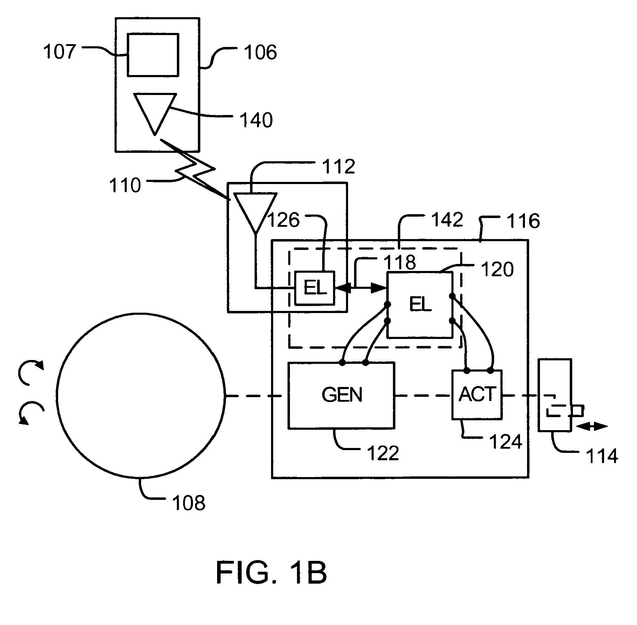

Figure 1B illustrates an embodiment of a self-powered electronic locking system;

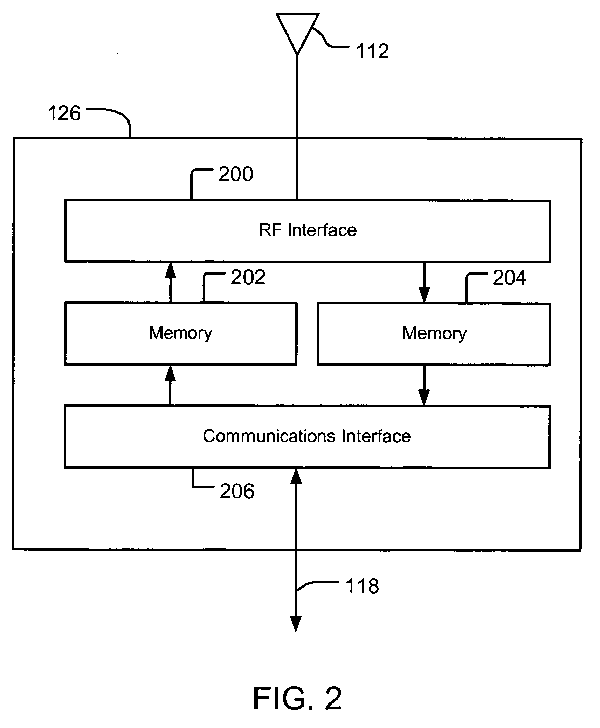

Figure 2 illustrates an embodiment of a communication unit;

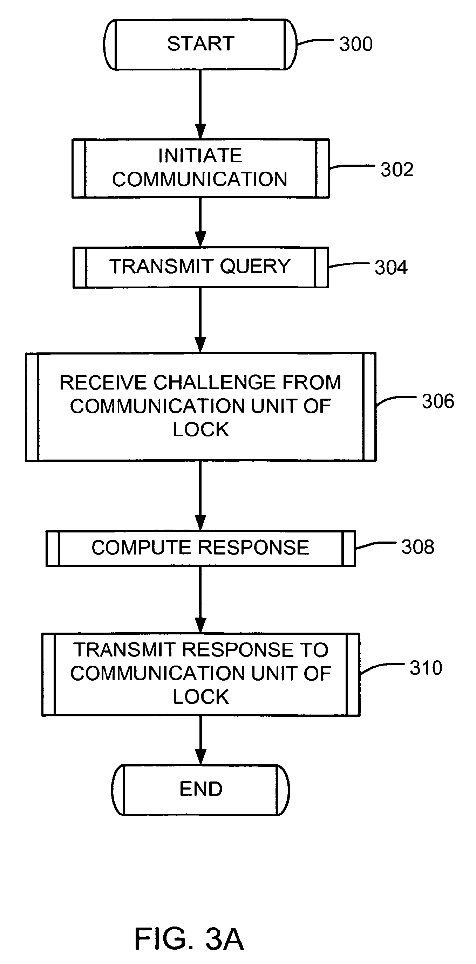

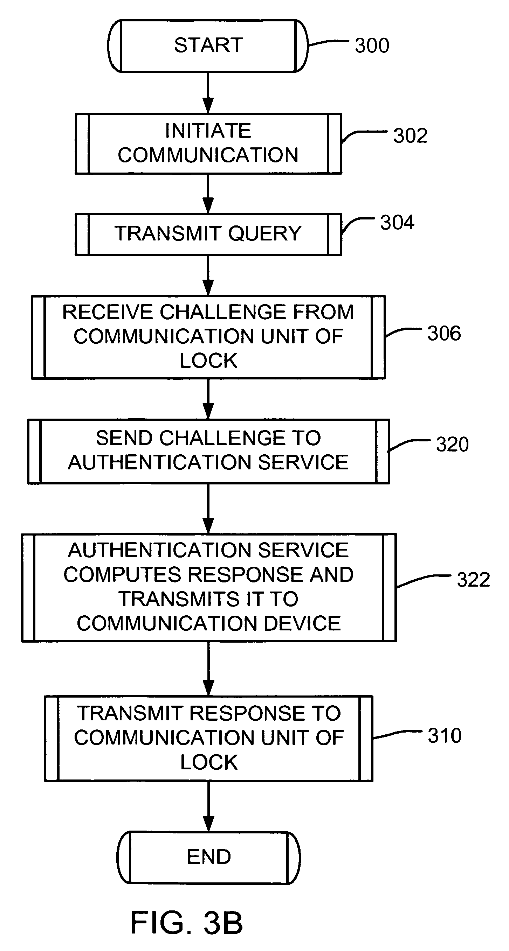

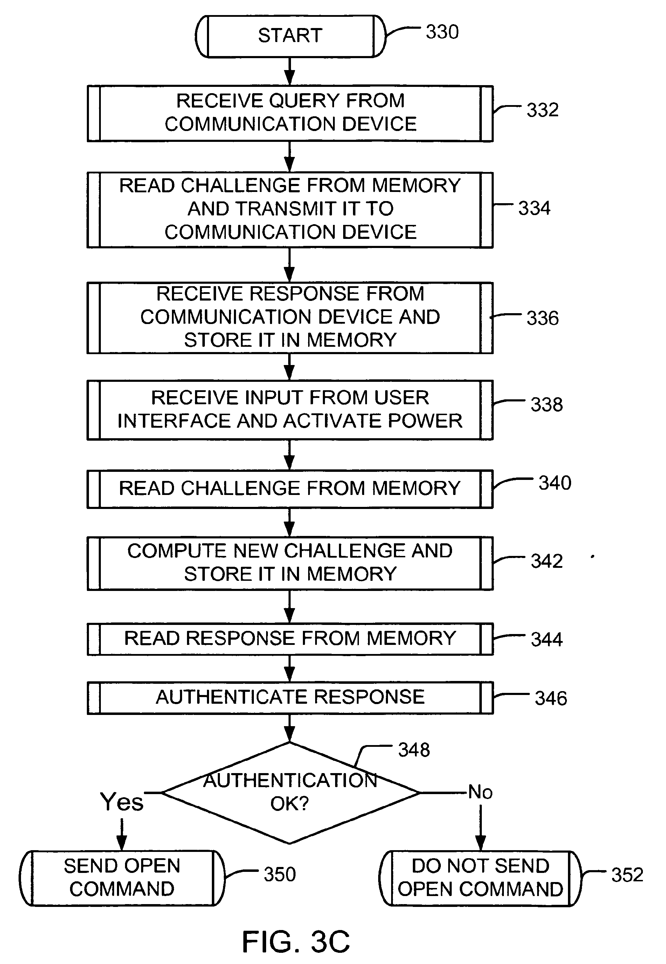

Figures 3A, 3B and 3C are flowcharts illustrating embodiments; and

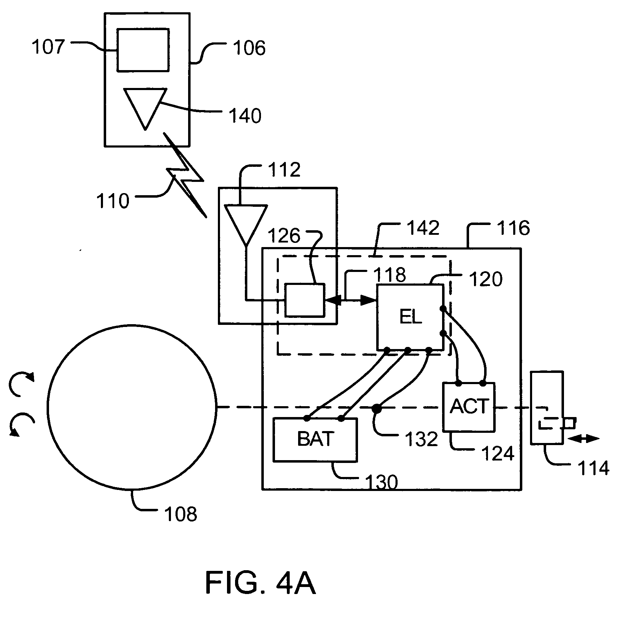

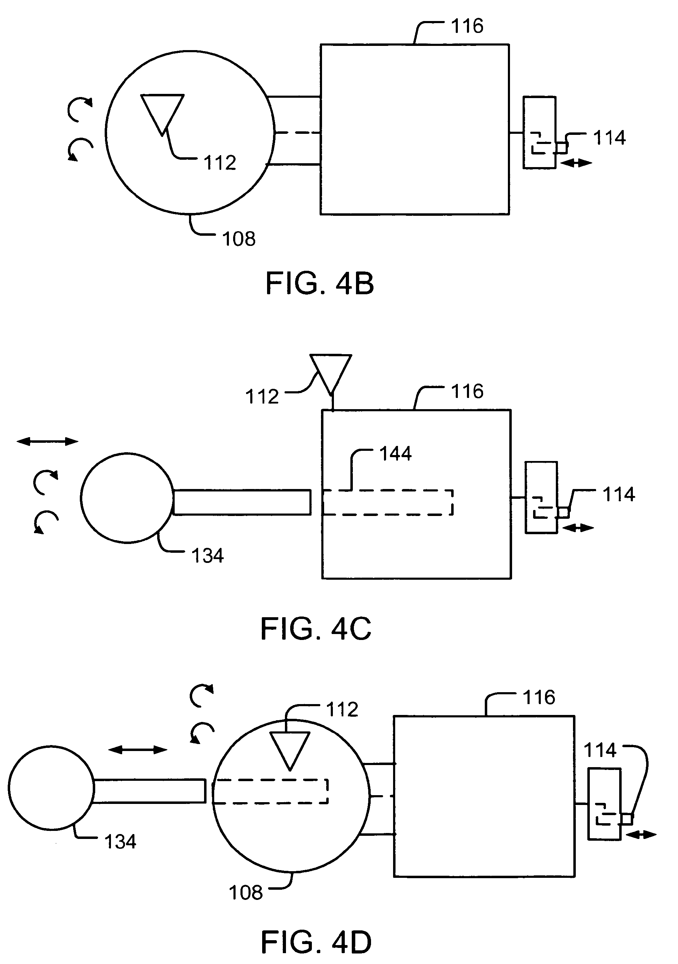

Figures 4A, 4B, 4C and 4D illustrate embodiments of an electronic locking system.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

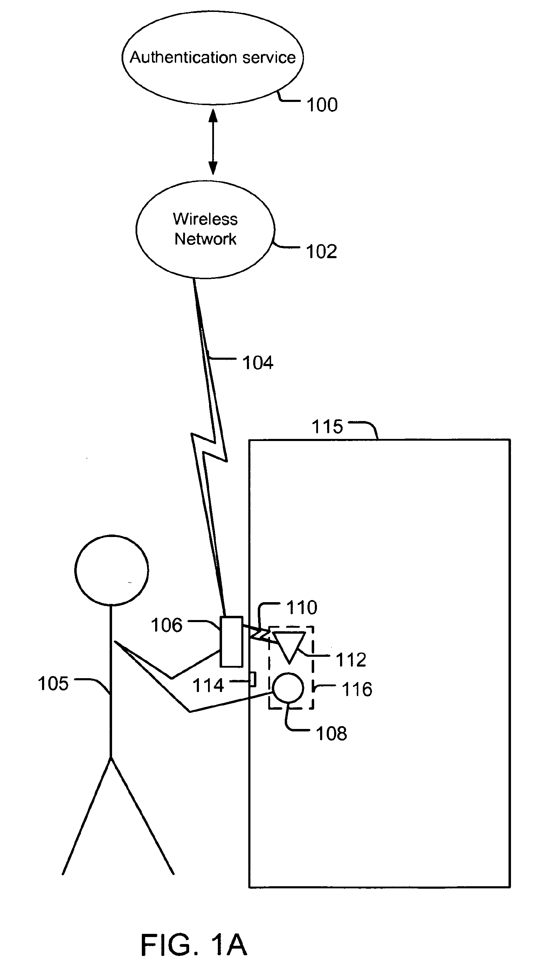

In an embodiment of the invention, an electronic key is utilized for wirelessly opening an electromechanical wireless lock. The key may be carried by a person as a part of his wireless communication device. Figure 1A shows an embodiment of an electronic locking system. A user 105 is about to open a door 115. The user has a communication device 106.

The communication device 106 refers to a portable computing device. Such computing devices include wireless mobile communication devices operating with or without a subscriber identification module (SIM), including, but not limited to, the following types of devices: mobile phone, smartphone, personal digital assistant (PDA), handset. The communication device 106 may have a wireless network channel 104 connection to a wireless network 102. The wireless connection channel 104 and the wireless network 102 may be implemented according to the GSM (Global System for Mobile Communications), WCDMA (Wideband Code Division Multiple Access), WLAN (Wireless Local Area Network) or any other suitable standard/non-standard wireless communication means.

In an embodiment, the communication device 106 comprises a Subscriber Identity Module (SIM) or a Universal Integrated Circuit Card (UICC). The SIM and the UICC are used in mobile communication systems to identify subscribers. Each communication device of a given system comprises such an identification. The SIM and the UICC comprise an integrated circuit capable of performing computations and storing data.

The communication device 106 is equipped with a short-range wireless communication unit configured to communicate with other respective short-range units upon detecting such a unit.

In an embodiment, short-range wireless communication is realised with a Near Field Communication (NFC) technique. NFC is a standardized wireless communication technique designed for data exchange between devices over short distances. A typical working distance is about 0 to 20 centimeters. NFC uses a given frequency (13.56 MHz). NFC transceivers may be active, semi-passive or passive.

Active transceivers comprise a power source which is used to power the transceiver components and the transmission. Passive transceivers comprise do not comprise a power supply. They receive the operating power wirelessly from a magnetic field generated by a nearby NFC transmission. Thus, they are active only when an active transceiver transmits within the coverage area of the transceiver. Passive transceivers do not consume power when they are in an idle state. Typically, passive transceivers are RFID (Radiofrequency identification) tags which comprise a memory circuit and a passive transmitter which is configured to respond to an NFC transmission query. Semi-passive transceivers comprise a power supply but the power supply is used to power a microchip of the transceiver but not to broadcast a signal. To transmit a semi-passive device needs to be powered by an active transceiver.

The door 115 comprises an electromechanical lock 116. The lock comprises a lock interface 108, a lock antenna 112 and a lock bolt 114. The lock antenna 112 is connected to an electronic circuitry of the lock (not shown in Fig. 1A). The circuitry comprises a short-range communication device. The device may be an NFC transceiver. In an embodiment, the NFC transceiver of the lock is a passive transceiver.

When the user approaches the door he wishes to open, he brings the communication device 106 close to the lock antenna 112. The electronic circuitry of the lock is powered by the short-range transmission of the communication device and a transaction is initiated. The communication device reads an authentication challenge from the electronic circuitry of the lock. The communication device 106 computes a response and transmits the response to the electronic circuitry of the lock. Next, the user operates the user interface 108 of the lock. The operating may comprise turning a doorknob or inserting a physical key into the lock. The operation activates the lock and provides operating power for the lock to perform the authentication. In the authentication, the lock authenticates the response. In an embodiment, the response is authenticated against the challenge. If the authentication succeeds the lock is set to an openable state and allows the user to operate the lock bolt.

In the above-described embodiment, the physical key does not perform any authentication but provides the activation of the operating power of the lock. In some embodiments, the key may provide some additional authentication.

In an embodiment, the communication device 106 signals the challenge read from the electronic circuitry of the lock to an authentication service 100 using the wireless network channel 104. The authentication service 100 may calculate the response and transmit it to the communication device 106.

In an embodiment, the authentication service may record an audit trail of actions related to the locks of the lock systems. Thus, each attempt to open a lock may be viewed later. In addition, the authentication service may utilize a time-limited access rights management. In an embodiment, the lock may store each action in an audit trail. The authentication service may be realized with one or more computers, servers or computing equipment and associated software.

Any suitable authentication technique may be used in connection with the embodiments of the present invention. The selection of the authentication technique depends on the desired security level of the lock 106 and possibly also on the permitted consumption of electricity for the authentication (especially in user-powered electromechanical locks)

In an embodiment, the authentication is performed with a SHA-1 (Secure Hash Algorithm) function, designed by the National Security Agency (NSA). In SHA-1, a condensed digital representation (known as a message digest) is computed from a given input data sequence (known as the message). The message digest is to a high degree of probability unique for the message. SHA-1 is called "secure" because, for a given algorithm, it is computationally infeasible to find a message that corresponds to a given message digest, or to find two different messages that produce the same message digest. Any change to a message will, with a very high probability, result in a different message digest. If the security needs to be increased, other hash functions (SHA-224, SHA-256, SHA-384 and SHA-512) in the SHA family, each with longer digests, collectively known as SHA-2 may be used.

In an embodiment, the challenge comprises a lock system id, a lock id, access data and a check value. The lock system id identifies the lock system to which the lock belongs. The lock id identifies the lock in the lock system. Each lock in a lock system may comprise a unique identification. The access data may be random numeric data. The check value is a cyclic redundancy check value confirming the integrity of the challenge.

In an embodiment, the authentication service or the communication device calculating the response may determine on the basis of the response whether the authentication will succeed or not. The communication device 106 may inform the user whether the authentication will succeed or not.

In an embodiment, a Personal Identification Number (PIN) or finger print data of the user of the communication device may be used when generating a response for the challenge. The communication device may comprise a finger print data reader configured to read a finger print and generate a numeric presentation on the basis of the finger print.

The challenge may comprise a PIN or finger print query. The user of the communication device may type in the PIN or use the finger print data reader of the communication device. The communication device is configured to send the PIN or the numeric presentation of the finger print as a response to the challenge. The lock may be configured to store a set of PINs and finger prints which allow the opening of the lock. The electronic circuitry of the lock compares the response to the stored values and if a match is found, the authentication is deemed to be successful.

Figure 1B shows a more detailed example of an electromechanical lock 116 and a communication device 106. The communication device comprises a short-range communication unit 140. In an embodiment, the short-range communication unit 140 is an NFC transceiver of active type. The communication device 106 may comprise a wireless transceiver 107 for realising a wireless network channel connection to a wireless network, such as a GSM network, a WCDMA network or a WLAN network or any other suitable standard/non-standard wireless communication network.

The lock 116 comprises an electric circuitry 142. The lock further comprises a user interface 108 and a generator 122 which is configured to power the lock 116 when the user interface of the lock is operated.

The electronic circuitry 142 may be implemented as one or more integrated circuits, such as application-specific integrated circuits ASIC. Other embodiments are also feasible, such as a circuit built of separate logic components, or memory units and one or more processors with software. A hybrid of these different embodiments is also feasible. When selecting the method of implementation, a person skilled in the art will consider the requirements set on the power consumption of the device, production costs, and production volumes, for example. The electronic circuitry 142 may be configured to execute computer program instructions for executing computer processes.

In the embodiment of Fig. 1B, the electronic circuitry 142 is realized with two circuits. The circuitry comprises a communication unit 126 and a lock electronics circuit 120 which are connected to each other with a communication channel 118. In an embodiment, the lock electronics circuit 120 is realized with a microcontroller and a memory unit.

The lock further comprises an antenna 112 connected to the communication unit 126. In an embodiment, the communication unit 126 is an NFC transceiver of passive type.

The lock further comprises an actuator 124 which controls a lock bolt 114. After a successful authentication the actuator 124 is configured to set the lock in a mechanically openable state. The actuator may be powered by electric power produced with the generator 108. The actuator 110 may be set to a locked state mechanically, but a detailed discussion thereon is not necessary to illuminate the present embodiments.

When the actuator 124 has set the lock in a mechanically openable state, the bolt mechanism 114 can be moved by operating the user interface 108, for example. Other suitable operating mechanisms may be used as well.

Figure 2 illustrates an embodiment of the communication unit 126. It may consist of a communication interface 200 between the antenna 112 and two memory units 202, 204. The communication interface 200 with memory units 202, 204 may be an NFC transceiver of a passive type. When the antenna 112 is within the operating range of an active NFC device (for example the communication device 106 of Figures 1A and 1B) the communication unit 126 is powered through the antenna 112 by the magnetic field generated by the active NFC device. The memory unit 202 is configured to store an authentication challenge and the memory unit 204 is configured to store an authentication response. The active NFC device powers the communication interface 200 with memories 202, 204, reads the challenge wirelessly from the memory unit 202 and stores the response wirelessly in the memory unit 204.

When the user interface of the lock is operated the communication unit 126 is powered by the generator 122 of Fig. 1B through the interface 206 using the communication channel 118. The lock electronics 120 read the response from the memory 204 and write a new challenge to the memory unit 202.

The memory unit 202 may be permanent memory realized with Flash or EEPROM technology, for example. The memory unit 204 may be non-permanent memory realized with RAM or DRAM technology, for example. The communication unit 126 is configured to store a response in the memory unit 204 only for a predetermined time; otherwise a security risk occurs if a lock is not operated after writing the response. The communication interface 206 illustrates an example of a communication interface between the memory units 202, 204 and the lock electronics 120. A read operation of the memory unit 204 and write operation of the memory unit 202 are powered by the lock when operated.

Figures 3A to 3C are flowcharts illustrating embodiments of the invention. Here it is assumed that by default the electromechanical lock 116 of the door 115 is in a locked state and it remains in the locked state until set to an openable state.

Figures 3A and 3B illustrate embodiments from the point of view of the communication device 106.

The opening sequence starts is step 300.

In step 302, the user of the communication device 106 initiates the communication device. This may comprise switching the NFC transceiver of the communication device on. The communication device is placed so that the lock antenna is within the coverage area of the NFC transceiver of the communication device. For example, the user may touch the lock antenna with the communication device.

In step 304, the communication device 106 transmits an NFC query to the lock.

In step 306, the communication device receives the current challenge sent by the lock.

In step 308 of Figure 3A, the communication device 106 computes a response. In an embodiment, the response is computed by the processing unit of the communication device 106. In an embodiment, the response is computed in a Subscriber Identity Module (SIM) or a Universal Integrated Circuit Card (UICC) located in the communication device 106.

Figure 3B illustrates another embodiment, where the communication device 106 transmits the challenge to the authentication service 100 in step 320.

In step 322 of Figure 3B, the authentication service 100 computes a response to the challenge and sends it to the communication device 106. This embodiment enables a time-limited access rights management and audit trail recording to the authentication service 100. From thereon, the process continues as in Figure 3A in the following manner.

In step 310, the communication device 106 transmits the response to the communication unit of the lock 116.

Figure 3C illustrates embodiments from the point of view of the electromechanical lock 116.

The opening sequence starts is step 330.

In step 332, the communication unit 126 is powered by the transmission of the communication device 106 and the unit receives a query from the communication device.

In step 334, the current challenge is read from the memory 202 and transmitted from the interface 200 to the communication device 106 using the antenna 112.

In step 336, the RF-interface 200 of the communication unit receives a response from the communication device 106. The interface stores the response in the memory 204. The memory 204 is configured to store the response for a predetermined time period.

The above operations in the communication unit 126 are powered by the NFC transmission of the communication device.

In step 338, the lock receives a user input from the user interface of the lock. The input activates power for the rest of the opening sequence operations.

In step 340, a lock electronics circuit 120 reads the current challenge from its internal memory where it is stored.

In step 342, the lock electronics circuit 120 computes a new challenge and stores it in its internal memory and in the memory 202 via the channel 118 and the interface 206.

In step 344, the lock electronics circuit 120 reads the response from the memory 204 via the channel 118 and in the interface 206.

In step 346, the lock electronics circuit 120 authenticates the response. In an embodiment, the lock electronics circuit 120 authenticates the response against the challenge.

In step 348 it is checked whether the authentication was successful.

If it was, the lock electronics circuit 120 sends an open command to the actuator 124 of the lock in step 350. The actuator 124 sets the lock into an openable state.

If the authentication failed, the lock electronics circuit 120 does not send an open command to the actuator 124 of the lock in step 352 and the lock remains in a locked state.

Above, step 338 comprised the activation of power for the lock on the basis of the input from the user. The input operations on the user interface may comprise turning a doorknob or inserting a physical key into the lock. The operation activates the lock and provides operating power for the lock to perform authentication.

In embodiments utilising the lock structure of Figure 1B, the operating of the user interface 108 of the lock enables the generator to power the lock 116.The generator may generate electricity from the turning of a door knob or a key insertion.

Figures 4A, 4B, 4C and 4D illustrate examples of other embodiments of an electronic locking system.

In the example of Figure 4A, the lock comprises a power supply 130 which is configured to power the lock. The power supply 130 may be an internal battery, an external battery or an external power supply. In an embodiment, the lock electronics circuit 120 may be configured to switch itself off when not in use to enable a long battery lifetime. When a user operates the lock interface 108, a sensor 132 is activated. When activated, the sensor wakes the lock electronics circuit 120. The lock electronics circuit is powered up and it is configured to read a response from the communications unit 126, generate and write a new challenge to the communications unit 126 for a next opening sequence and perform authentication. In case of a successful authentication the lock electronics circuit activates the actuator 124 which sets the lock 116 to an openable state, and writes a new challenge to the communications unit 126 for a next opening sequence.

In the example of Figure 4B, the lock antenna 112 is embedded in the door knob 108. In this embodiment, the door opening sequence may comprise the following steps. At first, a user touches the knob 108 by a communication device 106. In the second phase, the knob 108 is turned by the user 105 to activate power for authentication and set the lock 116 to an openable state. In the third phase, turning the knob 108 operates the bolt 114. In addition, a lever type operation interface can be used instead of a bolt structure. The user experiences the second and the third phase as one continuous turn of the knob.

In the example of Figure 4C, the lock antenna 112 is located on the door and a key 134 is used for operating a lock 116. The user interface of the lock comprises a keyhole 144. In this embodiment the door opening sequence may comprise the following steps. At first, a user touches the antenna 112 with the communication device 106. In the second phase, the key 134 is inserted into the keyhole 114 of the lock 116 to activate power for authentication and set the lock 116 to an openable state. In the third phase, the turning of the key 134 operates the bolt 114.

The example of Figure 4D illustrates a lock 116, which is a combination of the lock structures of Figures 4B and 4C. The lock of Figure 4D may have different operation modes. In an embodiment, the lock 116 authenticates both the key 134 and the response received from the communication device 106. The lock is set into an openable state if both authentications are successful.

In another embodiment, the lock 116 authenticates the response received from the communication device 106. The key 134 is only used to operate the lock mechanism.

In another embodiment, the lock operation may be different for different users. Some users use the key 134 for authentication. Some users (temporary users, for example) use the communication device 106 for authentication and open the lock 116 by turning the knob 108.

In an embodiment, features of the invention are realized as software. Embodiments may be realized as a computer program product encoding a computer program of instructions for executing a computer process carrying out the above described steps for operating an electromechanical lock.

It will be obvious to a person skilled in the art that, as technology advances, the inventive concept can be implemented in various ways. The invention and its embodiments are not limited to the examples described above but may vary within the scope of the claims.

## Claims

1. An electromechanical lock (116) comprising:
an electronic circuitry (142) for storing a challenge, providing a wireless interface (126) for a communication device (106) to read the challenge,
means for receiving a response from the communication device (106) and storing it in a memory (204) of the wireless interface (126),
wherein the electronic circuitry (142) is configured to receive wirelessly from the communication devise (106) operating power for communication with the communication device (106) and to receive and store the response,
means for reading the response from the memory (204) of the wireless interface (126) and means for authenticating the response, and for issuing an open command provided that the authentication is successful,
actuator means (124) to receive the open command and to set the lock in a mechanically openable state,
wherein a user interface (108) is configured to receive input from a user, thereupon activating operating power for reading, authenticating and actuator means.

2. The electromechanical lock (116) of claim 1 wherein the lock is configured to obtain the operating power for the user interface (108) and to receive and to store the response operations from a Near Field Communication (NFC) field generated by the communication device (106).

3. The electromechanical lock (116) of any preceding claim, wherein the lock is configured to store the response in the electronic circuitry (142) for a predetermined time.

4. The electromechanical lock (116) of any preceding claim, wherein the lock (116) is configured to calculate a new challenge and store the challenge in the circuitry (142) after receiving user input with the user interface (108).

5. The electromechanical lock (116) of any preceding claim, wherein the electronic circuitry (142) is configured to perform the authentication of the response by using the same algorithm as used in the communication device (106) when generating the response.

6. The electromechanical lock (116) of any preceding claim, wherein the challenge comprises a lock system id, a lock id, access data and a check value.

7. The electromechanical lock (116) of any preceding claim, wherein the electronic circuit (142) configured to authenticate the response against the challenge.

8. The electromechanical lock (116) of any preceding claim, wherein the electronic circuitry (142) comprises
a communication unit (126) for storing a challenge and providing a radio frequency interface (200) for a communication device (106) and receiving and storing a response from the communication device (106), and
a lock electronics circuit (120) for reading the response from the communication unit (126) and the challenge from a memory (204), authenticating the response, and for issuing an open command.

9. The electromechanical lock (116) of claim 8, wherein the communication unit (126) comprises an interface (206) configured to communicate with the lock electronics circuit (120).

10. The electromechanical lock (116) of claim 8, wherein the communication unit (126) comprises a memory (202) for storing the challenge, a memory (204) for storing the response and an antenna (112) connected to the radio frequency interface (200).

11. The electromechanical lock (116) of any preceding claim, wherein the lock (116) is configured to authenticate a key (134) inserted into the lock and issue an open command provided that the authentication is successful.

12. The electromechanical lock (116) of any preceding claim, wherein the user interface (108) comprises a door knob (108) and the lock (116) is configured to activate operating power for the authenticating and actuator operations when the door knob (108) is operated by a user.

13. The electromechanical lock (116) of any preceding claim, wherein the user interface (108) comprises a keyhole (144) and the lock (116) is configured to activate power operating power for the authenticating and actuator operations when a key (134) is inserted to the keyhole (144).

14. A method for operating an electromechanical lock (116), comprising:
storing a challenge in an electronic circuitry (142) of the electromechanical lock (116);
receiving wirelessly from a communication device (106) operating power both for
providing a wireless interface (126) for the communication device (106) to read the challenge being stored in the electronic circuitry (142) of the electromechanical lock (116) and
for receiving and storing a response from the communication device (106) in a memory (204) of the wireless interface (126);
receiving with the user interface (108) of the electromechanical lock (116) an input from a user, thereupon activating the operating power both for
reading the response from the memory (204) of the wireless interface (126) and for authenticating the response; and
for issuing an open command provided that the authentication is successful and
for setting the lock in a mechanically openable state in response to the open command.

15. The method of claim 14, further comprising:
communicating with the communication device (106) using Near Field Communication (NFC).

16. The method of any preceding claim, further comprising:
providing power for the receiving and storing of the response by a Near Field Communication (NFC) field generated by the communication device (106).

17. The method of any preceding claim, further comprising:
storing the response in the electronic circuitry (142) for a predetermined time.

18. The method of any preceding claim, further comprising:
authenticating the response against the challenge.

19. The method of any preceding claim, further comprising:
calculating and storing a new challenge after receiving user input with the user interface (108).

20. The method of any preceding claim, further comprising:
calculating the response in the communication device (106).

21. The method of any of the preceding claims 14 to 19, further comprising:
the communication device (106) sending the challenge to an authentication service (100),
the authenticating service (100) calculating the response,
the communication device (106) receiving the response from the authenticating service (100), and
the communication device (106) transmitting the response to the electronic circuitry (142).

## Patentansprüche

1. Eine elektromechanische Sperre (116), die Folgendes aufweist:
ein elektronisches Schaltkreissystem (142) zum Speichern einer Aufgabe, das ein drahtloses Interface (126) für ein Kommunikationsgerät (106) zum Lesen der Aufgabe bereitstellt,
Mittel zum Erhalten einer Erwiderung von dem Kommunikationsgerät (106) und sie in einem Speicher (204) des drahtlosen Interface (126) zu speichern,
wobei das elektronische Schaltkreissystem (142) konfiguriert ist, drahtlos von dem Kommunikationsgerät (106) Betriebskraft für die Kommunikation mit dem Kommunikationsgerät (106) zu erhalten und eine Erwiderung zu erhalten und zu speichern,
Mittel zum Lesen der Erwiderung aus dem Speicher (204) des drahtlosen Interface (126) und Mittel zur Authentifizierung der Erwiderung, und zum Ausgeben eines offenen Befehls, vorausgesetzt, dass die Authentifizierung erfolgreich ist,
Auslösemittel (124), um den offenen Befehl zu erhalten und die Sperre in einen mechanisch zu öffnenden Zustand zu versetzen,
wobei ein Anwender-Interface (108) konfiguriert ist, eine Eingabe von dem Anwender zu erhalten, daraufhin die Betriebskraft für das Lesen, das Authentifizieren und die Auslösemittel zu aktivieren.

2. Die elektromechanische Sperre (116) gemäß dem Patentanspruch 1, wobei die Sperre konfiguriert ist, Betriebskraft für das Anwender-Interface (108) zu erhalten und die Erwiderungsoperationen von einem Near Field Communication (NFC)-Feld zu erhalten und zu speichern, das durch das Kommunikationsgerät (106) generiert wird.

3. Die elektromechanische Sperre (116) gemäß einem der vorangehenden Patentansprüche, wobei die Sperre konfiguriert ist, die Erwiderung in dem elektronischen Schaltkreissystem (142) für eine vorher bestimmte Zeit zu speichern.

4. Die elektromechanische Sperre (116) gemäß einem der vorangehenden Patentansprüche, wobei die Sperre (116) konfiguriert ist, eine neue Aufgabe zu kalkulieren und die Aufgabe in dem Schaltkreissystem (142) zu speichern, nachdem sie eine Anwendereingabe mit dem Anwender-Interface (108) erhalten hat.

5. Die elektromechanische Sperre (116) gemäß einem der vorangehenden Patentansprüche, wobei das elektronische Schaltkreissystem (142) konfiguriert ist, die Authentifizierung der Erwiderung durch Anwendung desselben Algorithmus, wie er in dem Kommunikationsgerät (106) bei dem Generieren der Erwiderung verwendet worden ist, durchzuführen.

6. Die elektromechanische Sperre (116) gemäß einem der vorangehenden Patentansprüche, wobei die Aufgabe eine Sperrsystemidentifikation, eine Sperridentifikation, Zugangsdaten und einen Überprüfungswert aufweist.

7. Die elektromechanische Sperre (116) gemäß einem der vorangehenden Patentansprüche, wobei das elektronische Schaltkreissystem (142) konfiguriert ist, die Erwiderung gegen die Aufgabe zu authentifizieren.

8. Die elektromechanische Sperre (116) gemäß einem der vorangehenden Patentansprüche, wobei das elektronische Schaltkreissystem (142) Folgendes aufweist:
eine Kommunikationseinheit (126) zum Speichern einer Aufgabe und zum Bereitstellen eines Radiofrequenz-Interface (200) für ein Kommunikationsgerät (106) und zum Erhalten und Speichern einer Erwiderung von dem Kommunikationsgerät (106), und
einen Sperren-Elektronik-Schaltkreis (120) zum Lesen der Erwiderung von der Kommunikationseinheit (126) und der Aufgabe aus einem Speicher (204), zum Authentifizieren der Erwiderung, und zum Ausgeben eines offenen Befehls.

9. Die elektromechanische Sperre (116) gemäß dem Patentanspruch 8, wobei die Kommunikationseinheit (126) ein Interface (126) aufweist, das konfiguriert ist, mit dem Sperren-Elektronik-Schaltkreis (120) zu kommunizieren.

10. Die elektromechanische Sperre (116) gemäß dem Patentanspruch 8, wobei die Kommunikationseinheit (126) einen Speicher (202) zum Speichern der Aufgabe, einen Speicher (204) zum Speichern der Erwiderung und eine an das Radiofrequenz-Interface (200) angeschlossene Antenne (112) aufweist.

11. Die elektromechanische Sperre (116) gemäß einem der vorangehenden Patentansprüche, wobei die Sperre (116) konfiguriert ist, den in die Sperre eingeführten Schlüssel (134) zu authentifizieren und ein offenes Befehl auszugeben, vorausgesetzt, dass die Authentifizierung erfolgreich ist.

12. Die elektromechanische Sperre (116) nach einem der vorangehenden Patentansprüche, wobei das Anwender-Interface (108) einen Türknauf (108) aufweist und die Sperre (116) konfiguriert ist, die Operationskraft für die Authentifizierungs- und Auslöseoperationen zu aktivieren, wenn der Türknauf (108) von einem Anwender betätigt wird.

13. Die elektromechanische Sperre (116) gemäß einem der vorangehenden Patentansprüche, wobei das Anwender-Interface (108) ein Schlüsselloch (144) aufweist und die Sperre (116) konfiguriert ist, die Betriebskraft für die Authentifizierungs- und Auslöseoperationen zu aktivieren, wenn ein Schlüssel (134) in das Schlüsselloch (144) eingeführt wird.

14. Ein Verfahren zum Betätigen einer elektromechanischen Sperre (116), welches Verfahren Folgendes umfasst:
eine Aufgabe in einem elektronischen Schaltkreissystem (142) der elektromechanischen Sperre (116) speichern;
drahtlos von einem Kommunikationsgerät (106) Betriebskraft erhalten sowohl für
das Versehen des Kommunikationsgerätes (106) mit einem drahtlosen Interface (126) zum Lesen der in dem elektronischen Schaltkreissystem (142) der elektromechanischen Sperre (116) gespeicherten Aufgabe als auch
das Erhalten und Speichern einer Erwiderung von dem Kommunikationsgerät (106) in einem Speicher (204) des drahtlosen Interface (126);
mit dem Anwender-Interface (108) der elektromechanischen Sperre (116) eine Eingabe von dem Anwender erhalten, daraufhin die Betriebskraft aktivieren sowohl für
das Lesen der Erwiderung aus dem Speicher (204) des drahtlosen Interface (126) als auch für das Authentifizieren der Erwiderung; und
für das Ausgeben eines offenen Befehls ausgeben, vorausgesetzt, dass die Authentifizierung erfolgreich ist und
für das Versetzen der Sperre in einen mechanisch zu öffnenden Zustand als Erwiderung auf den offenen Befehl.

15. Das Verfahren gemäß dem Patentanspruch 14, das weiterhin Folgendes umfasst:
mit dem Kommunikationsgerät (106) unter Anwendung des Near Field Communication (NFC)-Feldes kommunizieren.

16. Das Verfahren gemäß einem der vorangehenden Patentansprüche, das weiterhin Folgendes umfasst:
zum Erhalten und Speichern der Erwiderung durch ein von dem Kommunikationsgerät (106) generiertes Near Field Communication (NFC)-Feld Betriebskraft zur Verfügung stellen.

17. Das Verfahren gemäß einem der vorangehenden Patentansprüche, das weiterhin Folgendes umfasst:
die Erwiderung in dem elektronischen Schaltkreissystem (142) für eine im Voraus bestimmte Zeit speichern.

18. Das Verfahren gemäß einem der vorangehenden Patentansprüche, das weiterhin Folgendes umfasst:
die Erwiderung gegen die Aufgabe authentifizieren.

19. Das Verfahren gemäß einem der vorangehenden Patentansprüche, das weiterhin Folgendes umfasst:
eine neue Aufgabe kalkulieren und speichern, nachdem es mit dem Anwender-Interface (108) Anwendereingabe erhalten hat.

20. Das Verfahren gemäß einem der vorangehenden Patentansprüche, das weiterhin Folgendes umfasst:
die Erwiderung in dem Kommunikationsgerät (106) kalkulieren.

21. Das Verfahren nach einem der vorangehenden Patentansprüche 14 bis 19, das weiterhin Folgendes umfasst:
die Aufgabe durch das Kommunikationsgerät (106) an einen Authentifizierungsdienst (100) senden,
die Erwiderung durch den Authentifizierungsdienst (100) kalkulieren,
die Erwiderung von dem Authentifizierungsdienst (100) durch das Kommunikationsgerät (106) erhalten, und
die Erwiderung zu dem elektronischen Schaltkreissystem (142) durch das Kommunikationsgerät (106) übermitteln.

## Revendications

1. Verrouillage électromécanique (116) comprenant :
un circuit électronique (142), servant à stocker une demande d'accès, qui réalise une interface sans fil (126) permettant à un dispositif de communication (106) de lire la demande d'accès,
un moyen pour recevoir une réponse du dispositif de communication (106) et la stocker dans une mémoire (204) de l'interface sans fil (126),
le circuit électronique (142) étant configuré pour recevoir par une transmission sans fil depuis le dispositif de communication (106) l'énergie de fonctionnement nécessaire pour communiquer avec le dispositif de communication (106) et pour recevoir et stocker la réponse,
un moyen pour lire la réponse dans la mémoire (204) de l'interface sans fil (126) et un moyen pour authentifier la réponse et pour émettre une commande d'ouverture à la condition que l'authentification ait réussi,
un moyen actionneur (124) pour recevoir la commande d'ouverture et pour faire passer le verrouillage à un état dans lequel il peut être ouvert mécaniquement,
une interface utilisateur (108) étant configurée pour recevoir la saisie d'un utilisateur et, suite à cela, activer l'énergie de fonctionnement des moyens de lecture, d'authentification et d'actionnement.

2. Verrouillage électromécanique (116) selon la revendication 1, dans lequel le verrouillage est configuré pour obtenir l'énergie de fonctionnement permettant à l'interface utilisateur (108) de recevoir et stocker les opérations de réponse à partir d'un champ de communication en champ proche (NFC) généré par le dispositif de communication (106).

3. Verrouillage électromécanique (116) selon l'une quelconque des revendications précédentes, dans lequel le verrouillage est configuré pour stocker la réponse dans le circuit électronique (142) pendant une durée prédéterminée.

4. Verrouillage électromécanique (116) selon l'une quelconque des revendications précédentes, dans lequel le verrouillage (116) est configuré pour calculer une nouvelle demande d'accès et stocker cette demande d'accès dans le circuit (142) après avoir reçu une saisie de l'utilisateur par le biais de l'interface utilisateur (108).

5. Verrouillage électromécanique (116) selon l'une quelconque des revendications précédentes, dans lequel le circuit électronique (142) est configuré pour effectuer l'authentification de la réponse en utilisant le même algorithme que celui utilisé dans le dispositif de communication (106) lors de la génération de la réponse.

6. Verrouillage électromécanique (116) selon l'une quelconque des revendications précédentes, dans lequel la demande d'accès comprend une identité du système de verrouillage, une identité du verrouillage, des données d'accès et une valeur de contrôle.

7. Verrouillage électromécanique (116) selon l'une quelconque des revendications précédentes, dans lequel le circuit électronique (142) est configuré pour authentifier la réponse par rapport à la demande d'accès.

8. Verrouillage électromécanique (116) selon l'une quelconque des revendications précédentes, dans lequel le circuit électronique (142) comprend :
un module de communication (126) pour stocker une demande d'accès et réaliser une interface à haute fréquence (200) pour un dispositif de communication (106) et pour recevoir et stocker une réponse du dispositif de communication (106), et
un circuit électronique de verrouillage (120) pour lire la réponse du module de communication (126) et la demande d'accès dans une mémoire (204), pour authentifier la réponse et pour émettre une commande d'ouverture.

9. Verrouillage électromécanique (116) selon la revendication 8, dans lequel le module de communication (126) comprend une interface (206) configurée pour communiquer avec le circuit électronique de verrouillage (120).

10. Verrouillage électromécanique (116) selon la revendication 8, dans lequel le module de communication (126) comprend une mémoire (202) pour stocker la demande d'accès, une mémoire (204) pour stocker la réponse et une antenne (112) reliée à l'interface à haute fréquence (200).

11. Verrouillage électromécanique (116) selon l'une quelconque des revendications précédentes, dans lequel le verrouillage (116) est configuré pour authentifier une clé (134) introduite dans le verrouillage et pour émettre une commande d'ouverture à la condition que l'authentification ait réussi.

12. Verrouillage électromécanique (116) selon l'une quelconque des revendications précédentes, dans lequel l'interface utilisateur (108) comprend un bouton de porte (108) et le verrouillage (116) est configuré pour activer l'énergie de fonctionnement nécessaire aux opérations d'authentification et d'actionnement lorsque le bouton de porte (108) est manoeuvré par un utilisateur.

13. Verrouillage électromécanique (116) selon l'une quelconque des revendications précédentes, dans lequel l'interface utilisateur (108) comprend une entrée de clé (144) et le verrouillage (116) est configuré pour activer l'énergie de fonctionnement nécessaire aux opérations d'authentification et d'actionnement lorsqu'une clé (134) est introduite dans l'entrée de clé (144).

14. Procédé d'utilisation d'un verrouillage électromécanique (116), comprenant :
le stockage d'une demande d'accès dans un circuit électronique (142) du verrouillage électromécanique (116) ;
la réception par une transmission sans fil depuis un dispositif de communication (106) de l'énergie de fonctionnement nécessaire à la fois pour
réaliser une interface sans fil (126) pour permettre au dispositif de communication (106) de lire la demande d'accès stockée dans le circuit électronique (142) du verrouillage électromécanique (116) et pour
recevoir et stocker une réponse du dispositif de communication (106) dans une mémoire (204) de l'interface sans fil (126) ; et
la réception par le biais de l'interface utilisateur (108) du verrouillage électromécanique (116) d'une saisie d'un utilisateur et, suite à cela, l'activation de l'énergie de fonctionnement nécessaire à la fois pour
lire la réponse dans la mémoire (204) de l'interface sans fil (126) et authentifier la réponse, et
émettre une commande d'ouverture à la condition que l'authentification ait réussi, et
faire passer le verrouillage à un état dans lequel il peut être ouvert mécaniquement en réponse à la commande d'ouverture.

15. Procédé selon la revendication 14, comprenant en outre :
la communication avec le dispositif de communication (106) en utilisant une communication en champ proche (NFC).

16. Procédé selon l'une quelconque des revendications précédentes, comprenant en outre :
la fourniture de l'énergie nécessaire pour recevoir et stocker la réponse au moyen d'un champ de communication en champ proche (NFC) généré par le dispositif de communication (106).

17. Procédé selon l'une quelconque des revendications précédentes, comprenant en outre :
le stockage de la réponse dans le circuit électronique (142) pendant une durée prédéterminée.

18. Procédé selon l'une quelconque des revendications précédentes, comprenant en outre :
l'authentification de la réponse par rapport à la demande d'accès.

19. Procédé selon l'une quelconque des revendications précédentes, comprenant en outre :
le calcul et le stockage d'une nouvelle demande d'accès après avoir reçu la saisie de l'utilisateur par le biais de l'interface utilisateur (108).

20. Procédé selon l'une quelconque des revendications précédentes, comprenant en outre :
le calcul de la réponse dans le dispositif de communication (106).

21. Procédé selon l'une quelconque des revendications 14 à 19 précédentes, comprenant en outre :
l'envoi de la demande d'accès à un service d'authentification (100) par le dispositif de communication (106),
le calcul de la réponse par le service d'authentification (100),
la réception de la réponse du service d'authentification (100) par le dispositif de communication (106), et
la transmission de la réponse au circuit électronique (142) par le dispositif de communication (106).
